# EUROPEAN PATENT APPLICATION

(11) **EP 4 776 370 A1**
(43) Date of publication of application: **15.07.2026**
(21) Application number: 26150034.2
(22) Date of filing: 02.01.2026
(51) Int. Cl.: H01M 10/0525, H01M 10/0567, H01M 10/0569

(54) **SECONDARY BATTERY AND ELECTRONIC APPARATUS**

(30) Priority: 02.01.2025 CN 202510004007
(71) Applicant: Ningde Amperex Technology Ltd., Ningde City, Fujian Province 352100 (CN)
(72) Inventor: CUI, Hui, Ningde City, Fujian Province, China, 352100 (CN); CAO, Yang, Ningde City, Fujian Province, China, 352100 (CN); LIU, Junfei, Ningde City, Fujian Province, China, 352100 (CN); TANG, Chao, Ningde City, Fujian Province, China, 352100 (CN)
(74) Representative: Icosa

(57) **Abstract**

A secondary battery includes a non-aqueous electrolyte. The non-aqueous electrolyte includes: fluoroethyl propionate, where the fluoroethyl propionate is selected from the group consisting of 2,2-difluoroethyl propanoate, 2,2,2-trifluoroethyl propionate, and a combination thereof, and based on a total mass of the non-aqueous electrolyte, a mass percentage of the fluoroethyl propionate is 5% to 65%; and ethylene carbonate (EC) and propylene carbonate (PC), where based on the total mass of the non-aqueous electrolyte, the sum of the mass percentages of the ethylene carbonate (EC) and the propylene carbonate (PC) is less than or equal to 15%.

## Description

### TECHNICAL FIELD

This application relates to the field of electrochemical technologies, and in particular, to a secondary battery and an electronic apparatus.

### BACKGROUND

Secondary batteries, especially lithium-ion batteries, are widely used in portable electronic products, electric vehicles, aerospace, energy storage and other fields due to their advantages such as high energy density, good cycling performance, safety, environmental friendliness, and no memory effect. In order to meet the needs of social development, seeking secondary batteries with higher energy density has become an urgent problem to be solved, which makes batteries designed with large capacity, resulting in heat accumulation in the battery and deterioration of thermal safety performance.

Therefore, there is an urgent need to provide a secondary battery that can reduce heat accumulation in large-capacity batteries and improve the thermal safety performance of the secondary battery.

### SUMMARY

In order to solve the above problems, this application provides a secondary battery and an electronic apparatus.

According to a first aspect of this application, a secondary battery is provided, the secondary battery including a non-aqueous electrolyte, where the non-aqueous electrolyte includes:
(1) fluoroethyl propionate, where the fluoroethyl propionate is selected from the group consisting of 2,2-difluoroethyl propanoate, 2,2,2-trifluoroethyl propionate, and a combination thereof, and based on a total mass of the non-aqueous electrolyte, a mass percentage of the fluoroethyl propionate is 5% to 65%; and
(2) ethylene carbonate (Ethylene Carbonate, EC) and propylene carbonate (Propylene Carbonate, PC), where based on the total mass of the non-aqueous electrolyte, the sum of the mass percentages of the ethylene carbonate (EC) and the propylene carbonate (PC) is less than or equal to 15%.

In some embodiments of this application, the non-aqueous electrolyte of this application satisfies at least one of the following conditions: (1) based on the total mass of the non-aqueous electrolyte, the mass percentage of the fluoroethyl propionate is 10% to 60%; (2) based on the total mass of the non-aqueous electrolyte, the mass percentage of the ethylene carbonate is less than or equal to 10%; and (3) based on the total mass of the non-aqueous electrolyte, the mass percentage of the propylene carbonate is less than or equal to 10%.

In some embodiments of this application, based on the total mass of the non-aqueous electrolyte of this application, the mass percentage of the fluoroethyl propionate is 12% to 50%.

In some embodiments of this application, the non-aqueous electrolyte of this application satisfies at least one of the following conditions: (1) based on the total mass of the non-aqueous electrolyte, the mass percentage of the fluoroethyl propionate is 12% to 45%; and (2) based on the total mass of the non-aqueous electrolyte, a ratio of the mass percentage of the ethylene carbonate to the mass percentage of the propylene carbonate is 1:1.

In some embodiments of this application, the non-aqueous electrolyte of this application further includes fluoroethylene carbonate (FEC), and based on the total mass of the non-aqueous electrolyte, a mass percentage of the fluoroethylene carbonate is 3% to 15%.

In some embodiments of this application, the non-aqueous electrolyte of this application satisfies at least one of the following conditions: (1) based on the total mass of the non-aqueous electrolyte, the mass percentage of the fluoroethylene carbonate is 3% to 8%; and (2) based on the total mass of the non-aqueous electrolyte, a ratio of the mass percentage of the fluoroethyl propionate to the mass percentage of the fluoroethylene carbonate is 0.8 to 12.

In some embodiments of this application, the non-aqueous electrolyte of this application further includes a nitrile compound having two or more nitrile groups in a single molecule, and based on the total mass of the non-aqueous electrolyte, a mass percentage of the nitrile compound is 0.5% to 5%; and the nitrile compound is selected from the group consisting of succinonitrile, glutaronitrile, adiponitrile, pimelonitrile, suberonitrile, 2-methylglutaronitrile, compounds represented by the following formulas 1-1 to I-19, and a combination thereof:

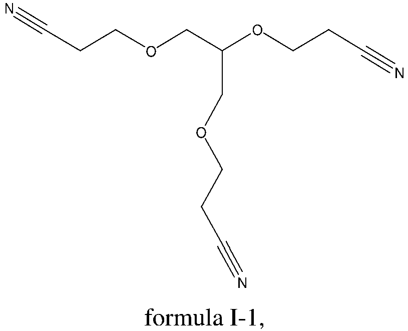

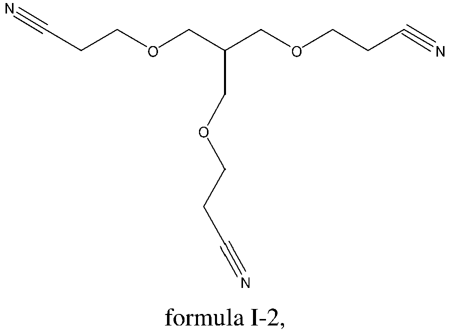

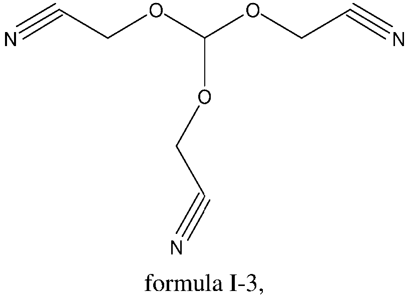

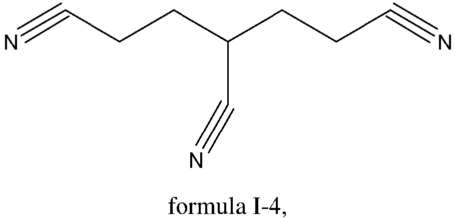

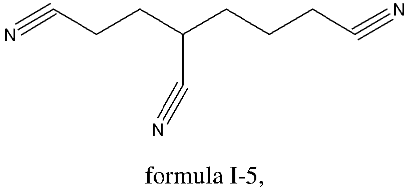

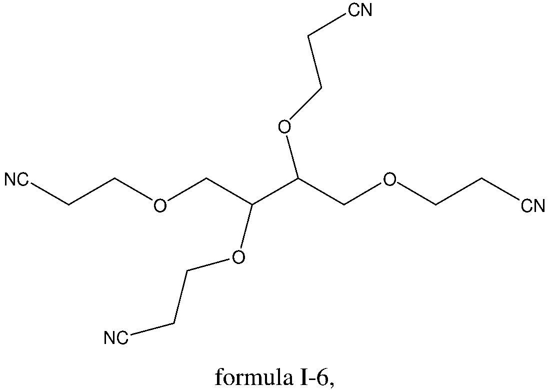

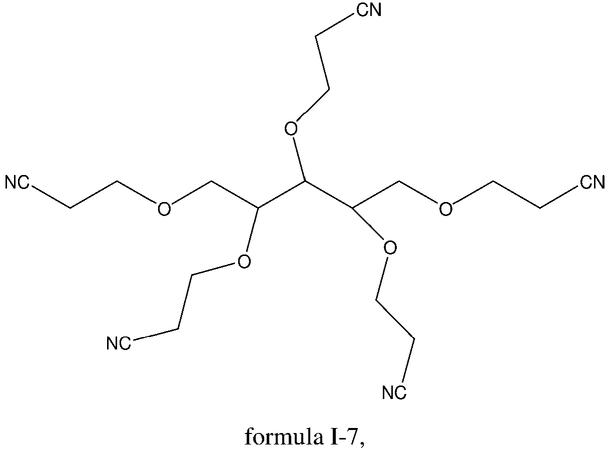

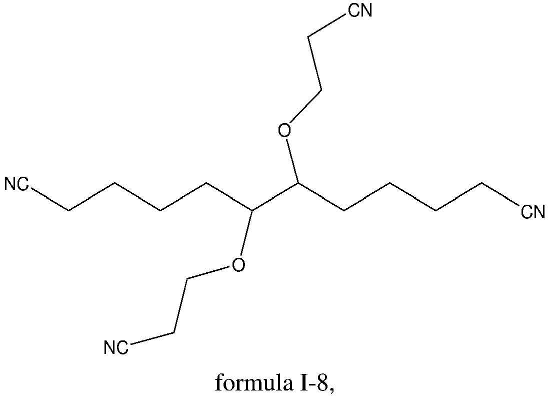

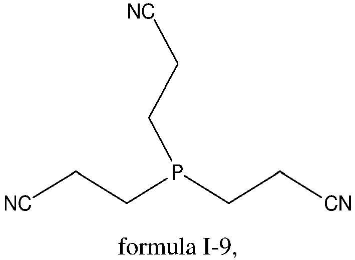

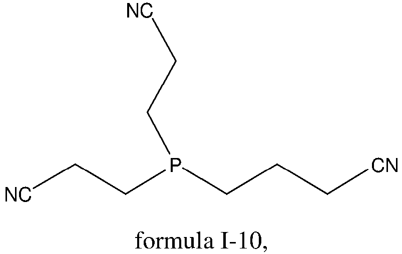

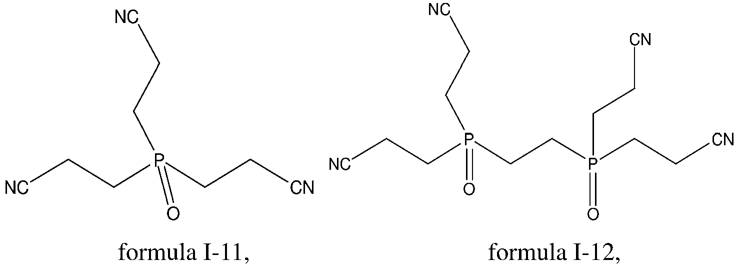

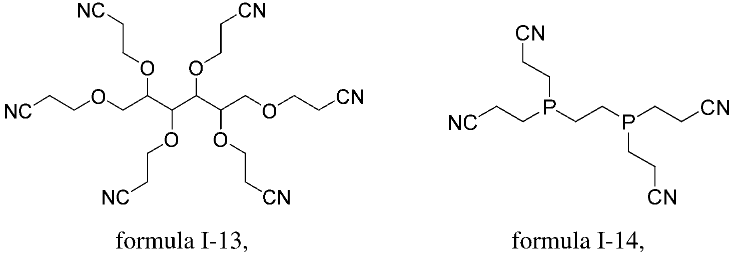

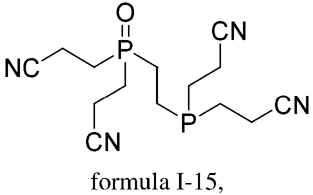

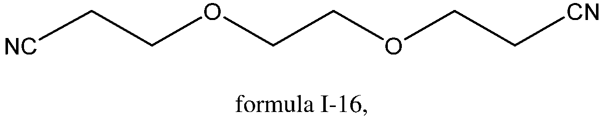

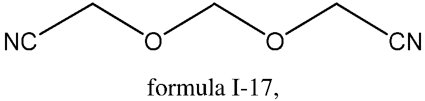

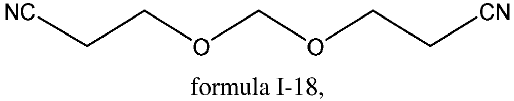

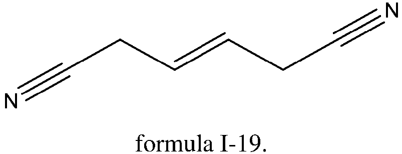

In some embodiments of this application, based on the total mass of the non-aqueous electrolyte, the mass percentage of the nitrile compound is 1.5% to 4%.

In some embodiments of this application, in the secondary battery provided by this application, the non-aqueous electrolyte further includes fluoroethylene carbonate (FEC), and based on the total mass of the non-aqueous electrolyte, the mass percentage of the fluoroethylene carbonate is 3% to 15%; and based on the total mass of the non-aqueous electrolyte, a ratio of the mass percentage of the fluoroethylene carbonate to the mass percentage of the nitrile compound is 0.6 to 16.

In some embodiments of this application, in the secondary battery provided by this application, the non-aqueous electrolyte further includes a compound represented by formula II, and the compound represented by formula II is selected from the group consisting of the compounds represented by the following formulas II-1 to II-14, and a combination thereof:

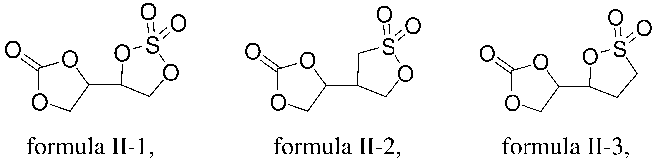

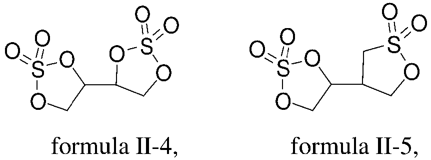

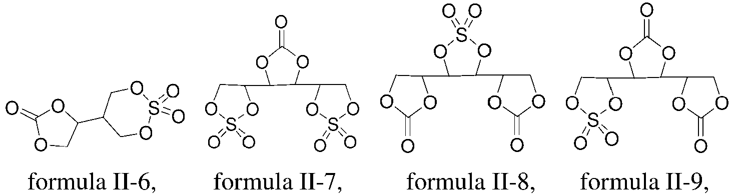

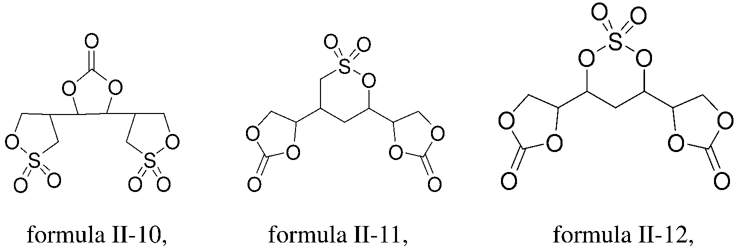

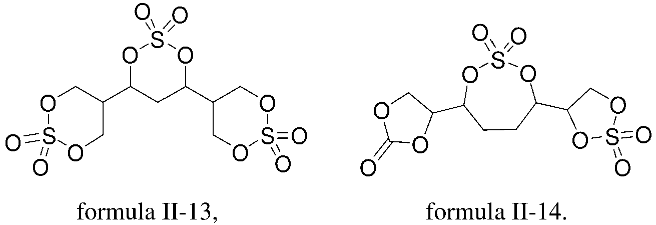

In some embodiments of this application, in the secondary battery provided by this application, based on the total mass of the non-aqueous electrolyte, a mass percentage of the compound represented by formula II is 0.2% to 3%.

In some embodiments of this application, the secondary battery provided by this application further includes a positive electrode, a negative electrode, a separator, a casing, and a tab, the tab extending from the interior of the casing to the exterior of the casing, and along a direction in which the tab extends, a width of the separator is greater than a width of the negative electrode, and a difference between the width of the separator and the width of the negative electrode is 0.5 mm to 2.8 mm.

According to a second aspect of some embodiments of this specification, an electronic apparatus is provided, including the secondary battery described in any one of some embodiments of the first aspect.

The technical solutions provided by this application may include the following beneficial effects:
(1) In the secondary battery provided by some embodiments of this application, fluoroethyl propionate is relatively farther away from a surface of the positive electrode during flow, and the reactivity at the positive electrode is reduced, thereby reducing heat generation on a positive electrode side.
(2) Ethylene carbonate and propylene carbonate, as cyclic carbonates, have good chemical stability and cycling performance, which help to quickly form a desired solid electrolyte interface (SEI) and reduce heat generation at the negative electrode.

It should be understood that the foregoing general description and the following detailed description are merely illustrative and explanatory, and are not intended to limit this specification.

Exemplary embodiments will be described in detail herein, but the exemplary embodiments described below do not represent all embodiments consistent with this specification. Rather, they are merely examples of embodiments consistent with some aspects of this specification as detailed in the appended claims.

The terminology used in this specification is for the purpose of describing particular embodiments/embodiments only and is not intended to limit this specification. The singular forms preceded by "a/an", "the", and "such" used in this specification and the appended claims are also intended to include their plural forms, unless otherwise specified clearly in the context. It should also be understood that the term "and/or" as used herein refers to and includes any or all possible combinations of one or more of the associated listed items.

It should be noted that in the specific embodiments of this application, a lithium-ion battery is taken as an example of a secondary battery to explain this application, but the secondary battery of this application is not limited to a lithium-ion battery. The specific technical solutions are as follows:

The secondary battery provided by this application includes a non-aqueous electrolyte, and the non-aqueous electrolyte contains:
(1) fluoroethyl propionate, where the fluoroethyl propionate is selected from the group consisting of 2,2-difluoroethyl propanoate (difluoroethyl propionate for short (CAS No. 1133129-90-4)), 2,2,2-trifluoroethyl propionate (trifluoroethyl propionate for short (CAS No. 82259-34-5)), and a combination thereof, and based on a total mass of the non-aqueous electrolyte, a mass percentage of the fluoroethyl propionate is 5% to 65%; and
(2) ethylene carbonate (EC) and propylene carbonate (PC), where based on the total mass of the non-aqueous electrolyte, the sum of the mass percentages of ethylene carbonate and propylene carbonate is less than or equal to 15%.

In order to meet the needs of social development, secondary batteries are currently designed in the direction of large capacity, while large-capacity design will lead to heat accumulation in the battery and deterioration of thermal safety performance. The inventors have found that when fluoroethyl propionate selected from the group consisting of 2,2-difluoroethyl propanoate and/or 2,2,2-trifluoroethyl propionate is used in a non-aqueous electrolyte, the fluoroethyl propionate is relatively farther away from a surface of a positive electrode during flow, and the reactivity at the positive electrode is reduced, thereby reducing heat generation on a positive electrode side, thereby improving the hot box accumulation effect of the secondary battery and improving thermal performance.

In particular, the inventors have found that 2,2-difluoroethyl propanoate and/or 2,2,2-trifluoroethyl propionate have better thermal performance improvement effects in the secondary battery of this application compared to other fluoroethyl propionates, and the non-aqueous electrolyte formed with these compounds and other components in the non-aqueous electrolyte provided by this application, such as ethylene carbonate and propylene carbonate, fluoroethylene carbonate, nitrile compounds having two or more nitrile groups in a single molecule, and compounds represented by formula II, has more excellent performance.

In this application, as the fluoroethyl propionate, either or both of 2,2-difluoroethyl propanoate and 2,2,2-trifluoroethyl propionate are selected, which is not particularly limited.

Studies have found that when the content of fluoroethyl propionate is too low, the thermal performance improvement of the non-aqueous electrolyte using the same is limited, and when the content of fluoroethyl propionate is too high, the stability of the non-aqueous electrolyte using the same is affected.

In this application, based on the total mass of the non-aqueous electrolyte, the mass percentage of fluoroethyl propionate selected from the group consisting of 2,2-difluoroethyl propanoate and/or 2,2,2-trifluoroethyl propionate is 5% to 65%.

In some embodiments of this application, based on the total mass of the non-aqueous electrolyte, the mass percentage of fluoroethyl propionate selected from the group consisting of 2,2-difluoroethyl propanoate and/or 2,2,2-trifluoroethyl propionate is, for example, 5%, 6%, 8%, 9%, 10%, 11%, 12%, 15%, 18%, 20%, 23%, 25%, 28%, 30%, 32%, 35%, 37%, 40%, 42%, 45%, 48%, 50%, 53%, 55%, 58%, 60%, 61%, 62%, 63%, 64%, 65%, or in a range defined by any two of these values.

In some embodiments of this application, based on the total mass of the non-aqueous electrolyte, the mass percentage of fluoroethyl propionate selected from the group consisting of 2,2-difluoroethyl propanoate and/or 2,2,2-trifluoroethyl propionate is 10% to 60%.

In some embodiments of this application, based on the total mass of the non-aqueous electrolyte, the mass percentage of fluoroethyl propionate selected from the group consisting of 2,2-difluoroethyl propanoate and/or 2,2,2-trifluoroethyl propionate is, for example, 10%, 11%, 12%, 15%, 18%, 20%, 23%, 25%, 28%, 30%, 32%, 35%, 37%, 40%, 42%, 45%, 48%, 50%, 53%, 55%, 58%, 60%, or in a range defined by any two of these values. At this time, the thermal performance of the secondary battery provided by this application is further improved.

In some embodiments of this application, based on the total mass of the non-aqueous electrolyte, the mass percentage of fluoroethyl propionate selected from the group consisting of 2,2-difluoroethyl propanoate and/or 2,2,2-trifluoroethyl propionate is 12% to 50%.

In some embodiments of this application, based on the total mass of the non-aqueous electrolyte, the mass percentage of fluoroethyl propionate selected from the group consisting of 2,2-difluoroethyl propanoate and/or 2,2,2-trifluoroethyl propionate is, for example, 12%, 15%, 18%, 20%, 23%, 25%, 28%, 30%, 32%, 35%, 37%, 40%, 42%, 45%, 48%, 50%, or in a range defined by any two of these values. At this time, the thermal performance of the secondary battery provided by this application is significantly improved.

In some embodiments of this application, based on the total mass of the non-aqueous electrolyte, the mass percentage of fluoroethyl propionate selected from the group consisting of 2,2-difluoroethyl propanoate and/or 2,2,2-trifluoroethyl propionate is 12% to 45%.

In some embodiments of this application, based on the total mass of the non-aqueous electrolyte, the mass percentage of fluoroethyl propionate selected from the group consisting of 2,2-difluoroethyl propanoate and/or 2,2,2-trifluoroethyl propionate is, for example, 12%, 15%, 18%, 20%, 23%, 25%, 28%, 30%, 32%, 35%, 37%, 40%, 42%, 45%, or in a range defined by any two of these values. At this time, the thermal performance of the secondary battery provided by this application is further significantly improved. In the secondary battery provided by this application, in the non-aqueous electrolyte, ethylene carbonate and propylene carbonate are also important constituent solvents. Moreover, ethylene carbonate and propylene carbonate, as cyclic carbonates, have good chemical stability and cycling performance, which help to quickly form a desired solid electrolyte interface (SEI).

In the secondary battery provided by this application, the sum of the mass percentages of ethylene carbonate and propylene carbonate in the non-aqueous electrolyte is not higher than 15%, thereby not only ensuring the cycling performance of the secondary battery, but also improving the thermal performance of the obtained secondary battery.

In some embodiments of this application, the sum of the mass percentages of ethylene carbonate and propylene carbonate in the non-aqueous electrolyte is, for example, 1%, 2%, 3%, 4%, 5%, 6%, 7%, 8%, 9%, 10%, 11%, 12%, 13%, 14%, 15%, or in a range defined by any two of these values.

In some embodiments of this application, the mass percentage of ethylene carbonate in the non-aqueous electrolyte is less than or equal to 10%. For example, the mass percentage may be 1%, 2%, 3%, 4%, 5%, 6%, 7%, 8%, 9%, 10%, or in a range defined by any two of these values. In this case, the thermal stability of the secondary battery is better.

In some embodiments of this application, the mass percentage of propylene carbonate in the non-aqueous electrolyte is less than or equal to 10%. For example, the mass percentage may be 1%, 2%, 3%, 4%, 5%, 6%, 7%, 8%, 9%, 10%, or in a range defined by any two of these values. In this case, the thermal stability of the secondary battery is better.

In some embodiments of this application, the sum of the mass percentages of ethylene carbonate and propylene carbonate in the non-aqueous electrolyte is less than or equal to 10%. For example, the sum of the mass percentages may be 1%, 2%, 3%, 4%, 5%, 6%, 7%, 8%, 9%, 10%, or in a range defined by any two of these values. At this time, the thermal performance of the obtained secondary battery is further improved.

In some embodiments of this application, the non-aqueous electrolyte satisfies at least one of the following conditions: (1) based on the total mass of the non-aqueous electrolyte, the mass percentage of the fluoroethyl propionate is 10% to 60%; (2) based on the total mass of the non-aqueous electrolyte, the mass percentage of the ethylene carbonate is less than or equal to 10%; and (3) based on the total mass of the non-aqueous electrolyte, the mass percentage of the propylene carbonate is less than or equal to 10%. When the non-aqueous electrolyte satisfies the above conditions, the fluoroethyl propionate is relatively farther away from the surface of the positive electrode during flow, and the reactivity at the positive electrode is reduced, thereby reducing heat generation on the positive electrode side. Ethylene carbonate and propylene carbonate, as cyclic carbonates, have good chemical stability and cycling performance, which help to quickly form a desired solid electrolyte interface (SEI) and reduce heat generation at the negative electrode, thereby reducing heat accumulation in the battery and improving the thermal safety performance of the secondary battery.

In some embodiments of this application, the non-aqueous electrolyte satisfies at least one of the following conditions: (1) based on the total mass of the non-aqueous electrolyte, the mass percentage of the fluoroethyl propionate is 12% to 45%; and (2) based on the total mass of the non-aqueous electrolyte, a ratio of the mass percentage of the ethylene carbonate to the mass percentage of the propylene carbonate is 1:1. At this time, the obtained secondary battery not only has excellent thermal performance, but also has excellent cycling performance.

In the secondary battery provided by this application, the non-aqueous electrolyte further includes fluoroethylene carbonate (Fluoroethylene carbonate, FEC, or fluoroethylene carbonate), which is conducive to improving the structural stability and thermal stability of the solid electrolyte interface (SEI), thereby improving the cycling performance and thermal performance of the secondary battery.

When the content of fluoroethylene carbonate in the non-aqueous electrolyte is too low, such as less than 3%, the improvement in the performance of the secondary battery is limited; and when the content of fluoroethylene carbonate in the non-aqueous electrolyte is too high, such as higher than 15%, the viscosity of an electrolyte increases, affecting lithium ion transport, and the rate performance of the secondary battery is affected. Therefore, in some embodiments of this application, based on the total mass of the non-aqueous electrolyte, the mass percentage of fluoroethylene carbonate is 3% to 15%.

In some embodiments of this application, the content of fluoroethylene carbonate in the non-aqueous electrolyte is, for example, 3%, 4%, 5%, 6%, 7%, 8%, 9%, 10%, 11%, 12%, 13%, 14%, 15%, or in a range defined by any two of these values.

In some embodiments of this application, the content of fluoroethylene carbonate in the non-aqueous electrolyte is 3% to 8%. For example, the content may be 3%, 4%, 5%, 6%, 7%, 8%, or in a range defined by any two of these values.

In some embodiments of this application, the non-aqueous electrolyte satisfies at least one of the following conditions: (1) based on the total mass of the non-aqueous electrolyte, a mass percentage of fluoroethylene carbonate is 3% to 8%; and (2) based on the total mass of the non-aqueous electrolyte, a ratio of the mass percentage of the fluoroethyl propionate to the mass percentage of the fluoroethylene carbonate is 0.8 to 12. For example, the ratio may be 0.8, 0.9, 1, 1.5, 2, 3, 4, 5, 6, 7, 8, 9, 10, 11, 11.1, 11.2, 11.3, 11.4, 11.5, 12, or in a range defined by any two of these values. In this case, the secondary battery has more excellent thermal performance and cycling performance.

In some embodiments of this application, based on the total mass of the non-aqueous electrolyte, the ratio of the mass percentage of the fluoroethyl propionate to the mass percentage of the fluoroethylene carbonate is 4 to 10. For example, the ratio may be 4, 5, 6, 7, 8, 9, 10, or in a range defined by any two of these values. In this case, the secondary battery has particularly excellent thermal performance and cycling performance.

The inventors have found that in the secondary battery of this application, the use of a nitrile compound having two or more nitrile groups in a single molecule in the non-aqueous electrolyte can adsorb and complex transition metals on the surface of the positive electrode, reduce reaction heat generation on the surface of the positive electrode, improve the stability of a positive electrode interface under high voltage. In addition, this can reduce the deposition of transition metals on the negative electrode, alleviate the catalytic decomposition heat generation of the solid electrolyte interface (SEI), and improve the hot box performance.

As the nitrile compound having two or more nitrile groups in a single molecule, it is preferably selected from the group consisting of succinonitrile, glutaronitrile, adiponitrile, pimelonitrile, suberonitrile, 2-methylglutaronitrile, compounds represented by the following formulas I-1 to I-19, and a combination thereof:

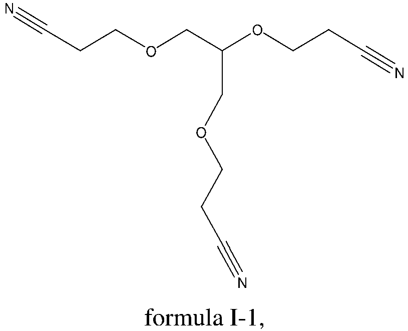

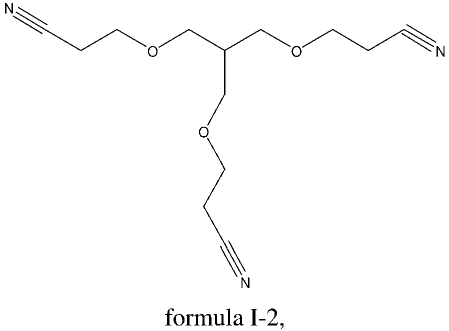

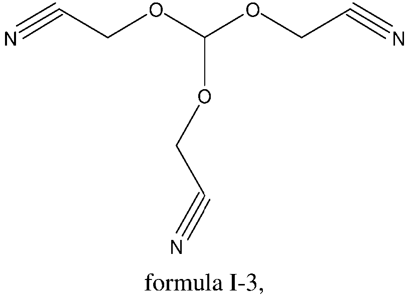

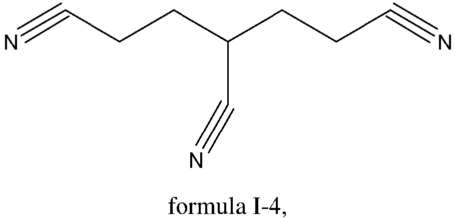

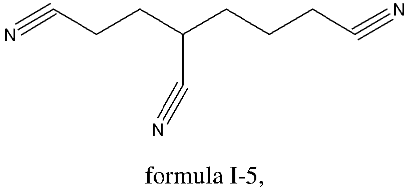

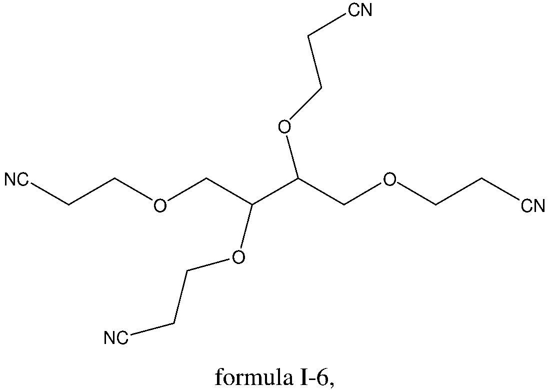

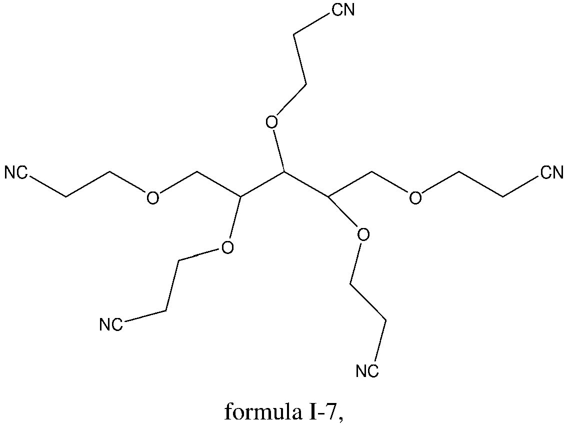

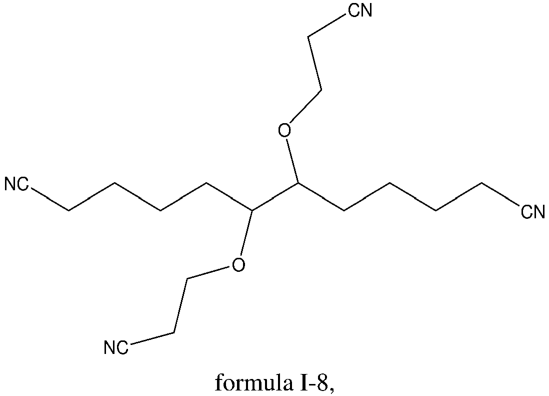

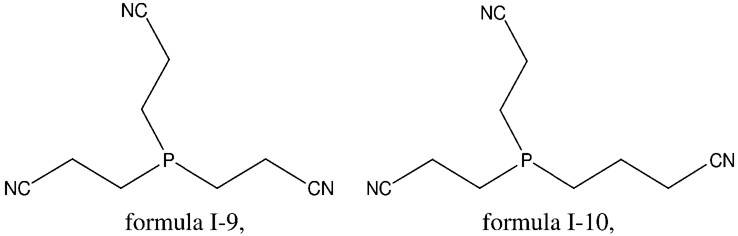

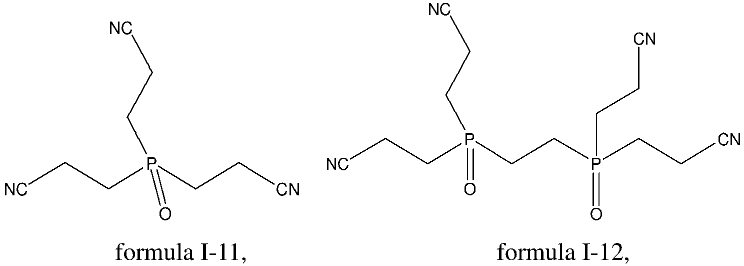

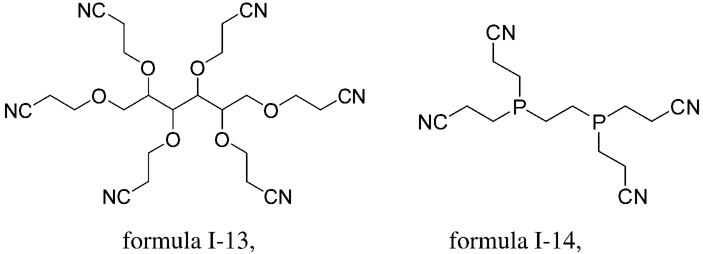

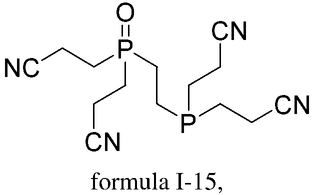

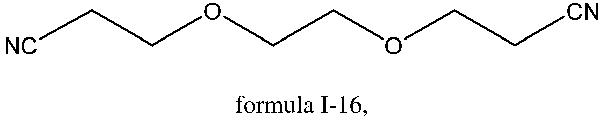

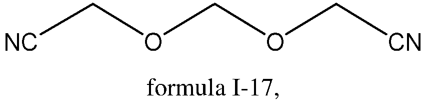

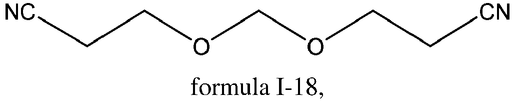

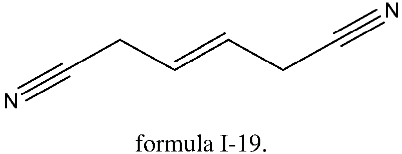

In the secondary battery of this application, if a mass percentage of the nitrile compound having two or more nitrile groups in a single molecule in the non-aqueous electrolyte is too low, such as less than 0.5%, the improvement in the hot box performance of the secondary battery is limited; and if the content is too high, such as higher than 5%, the overall performance of the secondary battery may be affected. Therefore, in some embodiments of this application, based on the total mass of the non-aqueous electrolyte, the mass percentage of the nitrile compound is 0.5% to 5%.

In some embodiments of this application, in the non-aqueous electrolyte, the mass percentage of the nitrile compound having two or more nitrile groups in a single molecule is 0.5%, 0.8%, 1%, 1.5%, 2%, 2.5%, 3%, 3.5%, 4%, 4.5%, 5%, or in a range defined by any two of these values.

In some embodiments of this application, the mass percentage of the nitrile compound having two or more nitrile groups in a single molecule in the non-aqueous electrolyte is 1.5% to 4%. For example, the mass percentage may be 1.5%, 2%, 2.5%, 3%, 3.5%, 4%, or in a range defined by any two of these values. In particular, the mass percentage of the nitrile compound having two or more nitrile groups in a single molecule is 2% to 4%. For example, the mass percentage may be 2%, 2.5%, 3%, 3.5%, 4%, or in a range defined by any two of these values. In this case, the secondary battery has better overall performance including thermal performance.

In some embodiments of this application, the non-aqueous electrolyte further includes fluoroethylene carbonate (FEC), and based on the total mass of the non-aqueous electrolyte, the mass percentage of fluoroethylene carbonate in the non-aqueous electrolyte is 3% to 15%; and a ratio of the mass percentage of fluoroethylene carbonate to the mass percentage of the nitrile compound having two or more nitrile groups in a single molecule is 0.6 to 16. For example, the ratio may be 0.6, 1, 1.6, 2, 4, 6, 8, 10, 12, 14, 16, or in a range defined by any two of these values. More particularly, the ratio of the mass percentage of fluoroethylene carbonate to the mass percentage of the nitrile compound having two or more nitrile groups in a single molecule is 2 to 12. For example, the ratio may be 2, 4, 6, 8, 10, 12, or in a range defined by any two of these values. In this case, the secondary battery has extremely excellent thermal performance.

In a preferred embodiment of the secondary battery of this application, the non-aqueous electrolyte further includes a compound represented by formula II, and the compound represented by formula II is selected from the group consisting of the following compounds represented by formulas II-1 to II-14, and a combination thereof:

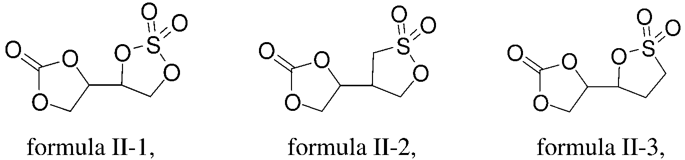

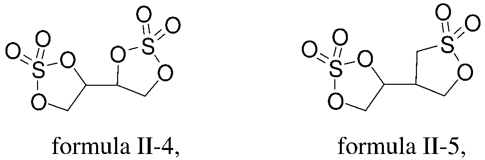

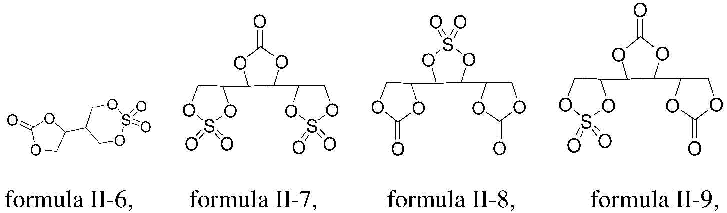

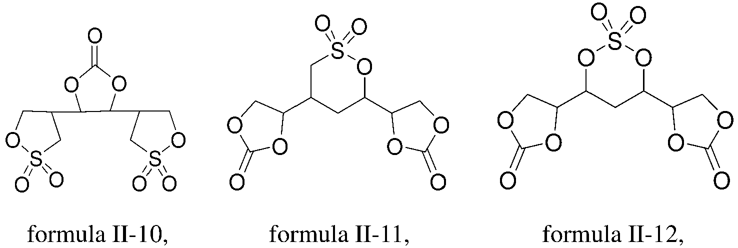

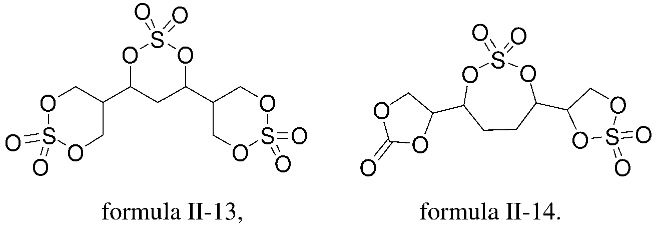

In the non-aqueous electrolyte of the secondary battery of this application, the use of a compound selected from formula II helps to form a stable solid electrolyte interface SEI earlier, reduce heat generation at the negative electrode, and improve hot box performance.

In some embodiments of this application, in the non-aqueous electrolyte, if the mass percentage of the compound selected from formula II is too low, such as less than 0.2%, the improvement in the thermal performance of the secondary battery is limited; and if the mass percentage of the compound selected from formula II is too high, such as higher than 3%, the impedance of the solid electrolyte interface SEI may be large, affecting the transport of lithium ions, and the cycling performance of the secondary battery is affected. Therefore, in some embodiments of this application, based on the total mass of the non-aqueous electrolyte, a mass percentage of the compound represented by formula II is 0.2% to 3%.

In some embodiments of this application, in the non-aqueous electrolyte, the mass percentage of the compound selected from formula II is, for example, 0.2%, 0.3%, 0.5%, 0.8%, 1%, 1.3%, 1.5%, 1.8%, 2%, 2.2%, 2.5%, 2.8%, 3%, or in a range defined by any two of these values.

In this application, the non-aqueous electrolyte may further include a lithium salt. In some embodiments, the electrolyte further includes a lithium salt. The lithium salt is, for example, at least one of LiPF₆, LiBF₄, LiSO₃F, LiN(FSO₂)₂, LiCF₃SO₃, LiN(FSO₂)(CF₃SO₂), LiN(CF₃SO₂)₂ or LiN(C₂F₅SO₂)₂, and preferably LiPF₆.

In the non-aqueous electrolyte of this application, the amount of lithium salt such as LiPF₆ may be a conventional amount such as 12.5%.

In this application, the non-aqueous electrolyte may further include other carbonate solvents, such as a linear carbonate, for example, diethyl carbonate (DEC), dimethyl carbonate (DMC), or the like, and the amount thereof is not particularly limited, for example, it may be used to make up the non-aqueous electrolyte.

In some embodiments of this application, the secondary battery further includes a positive electrode, a negative electrode, a separator, a casing, and a tab, the tab extending from the interior of the casing to the exterior of the casing, and along a direction in which the tab extends, a width of the separator is greater than a width of the negative electrode, and a difference between the width of the separator and the width of the negative electrode is 0.5 mm to 2.8 mm. For example, the difference may be 0.5 mm, 0.6 mm, 0.7 mm, 0.8 mm, 1.0 mm, 1.2 mm, 1.4 mm, 1.5 mm, 1.8 mm, 2.0 mm, 2.1 mm, 2.3 mm, 2.4 mm, 2.5 mm, 2.6 mm, 2.7 mm, 2.8 mm, or in a range defined by any two of these values. In this case, the secondary battery can adapt to the shrinkage of the separator at high temperature, reduce the risk of short circuit, and improve the hot box performance.

In this application, as the material of the positive electrode, materials, structures and manufacturing methods known in the art can be used.

The positive electrode may include a current collector and a positive electrode active material layer located on the current collector, and the positive electrode active material layer includes a positive electrode active material. The positive electrode active material includes at least one lithiated intercalation compound that reversibly intercalates and deintercalates lithium ions. In some embodiments, the positive electrode active material includes a composite oxide. In some embodiments, the composite oxide contains lithium and at least one element selected from the group consisting of cobalt, manganese, and nickel.

In some embodiments, the positive electrode active material is selected from the group consisting of lithium cobaltate, lithium manganate, lithium nickelate, lithium nickel cobalt manganate, lithium nickel cobalt aluminate, and a combination thereof.

In some embodiments, the positive electrode active material may have a coating layer on its surface, or may be mixed with another compound having a coating layer. The coating layer may include at least one compound of a coating element selected from the group consisting of oxides of the coating element, hydroxides of the coating element, oxyhydroxides of the coating element, oxycarbonates of the coating element, and hydroxycarbonates of the coating element. The compound used for the coating layer may be amorphous or crystalline.

In some embodiments, the coating element contained in the coating layer may include Mg, Al, Co, K, Na, Ca, Si, Ti, V, Sn, Ge, Ga, B, As, Zr, or any combination thereof. The coating layer can be applied by any method as long as the method does not adversely affect the performance of the positive electrode active material. For example, the method may include any coating method known in the art, such as spraying, dipping, and the like.

The positive electrode active material layer further includes a binder, and optionally includes a conductive material. The binder enhances bonding between particles of the positive electrode active material and bonding between the positive electrode active material and the current collector.

In some embodiments, the binder includes, but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, and the like.

In some embodiments, the conductive material includes but is not limited to a carbon-based material, a metal-based material, a conductive polymer, and a mixture thereof. In some embodiments, the carbon-based material is selected from the group consisting of natural graphite, artificial graphite, carbon black, acetylene black, Ketjen black, carbon fibers, and a combination thereof. In some embodiments, the metal-based material is selected from the group consisting of metal powder, metal fibers, copper, nickel, aluminum, and silver. In some embodiments, the conductive polymer is a polyphenylene derivative.

In some embodiments, the current collector may be aluminum, but is not limited thereto.

The positive electrode can be prepared by preparation methods known in the art. For example, the positive electrode can be obtained using the following method: mixing the active material, the conductive material, and the binder in a solvent to prepare an active material composition, and applying the active material composition on the current collector. In some embodiments, the solvent may include N-methylpyrrolidone and the like, but is not limited thereto.

In some embodiments, the positive electrode is made by forming, on the current collector, a positive electrode material using a positive electrode active material layer including a lithium transition metal compound powder and a binder.

In some embodiments, the positive electrode active material layer is usually manufactured by the following operations: A positive electrode material and a binder (a conductive material, a thickener, and the like used as needed) are dry-mixed to form a sheet, the obtained sheet is pressed onto a positive electrode current collector, or these materials are dissolved or dispersed in a liquid medium to form a slurry, and the slurry is applied onto a positive electrode current collector for drying. In some embodiments, the materials in the positive electrode active material layer include any materials known in the art.

The negative electrode includes a negative electrode current collector and a negative electrode active material layer. The negative electrode active material layer includes a negative electrode active material, and the specific type of the negative electrode active material is not subject to specific limitations and can be selected according to needs. Specifically, the negative electrode active material may include at least one of lithium metal, structured lithium metal, natural graphite, artificial graphite, mesocarbon microbeads (MCMB), hard carbon, soft carbon, silicon, a silicon-carbon composite, a Li-Sn alloy, a Li-Sn-O alloy, Sn, SnO, SnO₂, spinel-structure lithiated TiO₂-Li₄Ti₅O₁₂, and a Li-Al alloy.

The negative electrode active material layer may further include a binder. In some embodiments, the binder includes, but is not limited to polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

The negative electrode active material layer may further include a conductive material. In some embodiments, the conductive material includes, but is not limited to natural graphite, artificial graphite, carbon black, acetylene black, Ketjen black, carbon fibers, metal powder, metal fibers, copper, nickel, aluminum, silver, or a polyphenylene derivative.

The negative electrode active material layer may further include a conventional thickener and a filler, and the like.

The negative electrode current collector includes, but is not limited to copper foil, nickel foil, stainless steel foil, titanium foil, nickel foam, copper foam, or a polymer substrate coated with conductive metal.

The negative electrode may further include a conductive layer. The conductive material of the conductive layer may include, but is not limited to: at least one of a carbon-based material (for example, natural graphite, artificial graphite, carbon black, acetylene black, Ketjen black, carbon fiber, carbon nanotube, and graphene), a metal-based material (for example, metal powder and metal fiber, such as copper, nickel, aluminum, silver, and the like), a conductive polymer (for example, a polyphenylene derivative) and a mixture thereof.

In the secondary battery of this application, a separator is provided between the positive electrode and the negative electrode to prevent short circuit. The separator used in this application is not limited to any particular material or shape, and may be based on any technology disclosed in the prior art. For example, the separator includes a polymer, an inorganic substance, or the like formed by a material stable to the electrolyte of this application.

The separator is not particularly limited in this application, provided that the objectives of this application can be achieved. For example, the separator may include a substrate layer and a surface treatment layer. The material of the substrate layer may include, but is not limited to at least one of a polyethylene, polypropylene, and polytetrafluoroethylene-based polyolefin separator, a polyester film (for example, a polyethylene terephthalate film), a cellulose film, a polyimide film, a polyamide film, a spandex, an aramid film, a woven film, a non-woven film (non-woven fabric), a microporous film, a composite film, a separator paper, a laminated film, or a spinning film, and preferably polypropylene. The separator of this application may have a porous structure. A pore size is not particularly limited, provided that the objectives of this application can be achieved. Thickness of the separator is not particularly limited in this application, provided that the objectives of this application can be achieved. Optionally, the surface treatment layer is provided on at least one surface of the substrate layer, and the surface treatment layer may be a polymer layer or an inorganic substance layer, or a layer formed by a mixture of a polymer and an inorganic substance. The inorganic substance layer may include but is not limited to inorganic particles and an inorganic substance layer binder, and the inorganic particles are not particularly limited in this application, provided that the objectives of this application can be achieved. For example, the inorganic particles may include but are not limited to at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic substance layer binder is not particularly limited this application. For example, the inorganic substance layer binder may include but is not limited to at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and a material of the polymer may include but is not limited to at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

The secondary battery in this application is not particularly limited, and may include any apparatus in which electrochemical reactions take place. In some embodiments, the secondary battery may include but is not limited to a lithium metal secondary battery, a lithium-ion secondary battery, a lithium polymer secondary battery, or a lithium-ion polymer secondary battery.

A preparation process of the secondary battery is well known to persons skilled in the art, and is not particularly limited in this application. For example, the preparation process may include but is not limited to the following steps: A positive electrode plate, a separator, and a negative electrode plate are stacked in sequence and go through operations such as winding and folding as needed to obtain an electrode assembly with a winding structure, the electrode assembly is put into a packaging bag, an electrolyte is injected into the packaging bag, and the packaging bag is sealed to obtain a secondary battery; or a positive electrode plate, a separator, and a negative electrode plate are stacked in sequence, four corners of the entire laminated structure are fixed with tapes to obtain an electrode assembly with a laminated structure, the electrode assembly is put into a packaging bag, an electrolyte is injected into the packaging bag, and the packaging bag is sealed to obtain a secondary battery. In addition, if necessary, an overcurrent prevention element, a guide plate, and the like may be placed in the packaging bag as required, so as to prevent pressure increase, overcharge, and over-discharge in the secondary battery.

A second aspect of this application provides an electronic apparatus, including the secondary battery in any of the foregoing embodiments. The secondary battery provided by this application has good cycling performance and safety performance, so that the electronic apparatus provided by this application has a longer service life.

The electronic apparatus in this application is not particularly limited, and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, or a lithium-ion capacitor.

### Examples

Next, the examples of the present specification are described in detail.

### Preparation of electrolyte in Examples 1-1 to 1-24

In an argon atmosphere glove box with water content less than 10 ppm, ethylene carbonate (EC) and propylene carbonate (PC) were mixed, then 2,2-difluoroethyl propanoate and/or 2,2,2-trifluoroethyl propionate were added and mixed uniformly, and then the fully dried lithium salt LiPF₆ was dissolved in the above non-aqueous solvent, fluoroethylene carbonate (FEC) was added, and finally diethyl carbonate (DEC) was added to make up 100% to prepare an electrolyte. The components and amounts used are shown in table 1 below.

### Preparation of electrolyte in Examples 2-1 to 2-8

On the basis of the components and amounts of the electrolyte in Example 1-13, after fluoroethylene carbonate (FEC) was added, a nitrile compound was added, and finally diethyl carbonate (DEC) was added to make up 100% to prepare an electrolyte. The components and amounts used are shown in table 2 below.

### Preparation of electrolyte in Examples 2-9 to 2-11

On the basis of the components and amounts of the electrolyte in Example 1-13, as shown in table 2, the amount of fluoroethylene carbonate (FEC) was adjusted, and after fluoroethylene carbonate (FEC) was added, a nitrile compound was added, and finally diethyl carbonate (DEC) was added to make up 100% to prepare an electrolyte. The components and amounts used are shown in table 2 below.

### Preparation of electrolyte in Examples 2-12 to 2-15

On the basis of the components and amounts of the electrolyte in Example 1-13, after fluoroethylene carbonate (FEC) was added, a compound represented by formula II was added, and finally diethyl carbonate (DEC) was added to make up 100% to prepare an electrolyte. The components and amounts used are shown in table 2 below.

### Preparation of electrolyte in Examples 2-16 to 2-17

On the basis of the components and amounts of the electrolyte in Example 1-13, after fluoroethylene carbonate (FEC) was added, a nitrile compound and a compound represented by formula II were added, and finally diethyl carbonate (DEC) was added to make up 100% to prepare an electrolyte. The components and amounts used are shown in table 2 below.

### Comparative Examples 1-6

Lithium-ion secondary batteries were prepared in a manner similar to Examples 1-1 to 1-24, except that the components and the mass percentages thereof in the electrolyte were as shown in table 1 below.

### Preparation of secondary battery in examples

### (1) Preparation of negative electrode

A negative electrode active material graphite, styrene-butadiene rubber (SBR), and sodium carboxymethyl cellulose (CMC) were fully stirred and mixed at a weight ratio of 97.4:1.2:1.4 in an appropriate amount of deionized water solvent to form a uniform negative electrode slurry. The slurry was applied onto a negative electrode current collector copper foil, and after the copper foil was dried and cold pressed, and tabs were welded, a negative electrode was obtained.

### (2) Preparation of positive electrode

A positive electrode active material lithium cobaltate (LiCoO₂), a conductive agent acetylene black, and a binder polyvinylidene fluoride were mixed at a mass ratio of 96:2:2, N-methylpyrrolidone (NMP) was added, and uniformly stirred under the action of a vacuum mixer to obtain a positive electrode slurry, where a solid content of the positive electrode slurry was 70 wt%. The positive electrode slurry was uniformly applied onto one surface of a positive electrode current collector aluminum foil, and dried to obtain a positive electrode plate having a single surface coated with a positive electrode material layer with a thickness of 110 µm. The above steps were repeated on another surface of the aluminum foil to obtain a positive electrode plate with two surfaces coated with positive electrode material layers, and then cold pressing and cutting were performed to obtain a positive electrode plate with dimensions of 74 mm × 867 mm.

### (3) Preparation of separator

A porous polyethylene film (provided by Celgard Company) with a thickness of 7 µm was used as the separator.

### Example 1-13, Example 3-1, Example 3-2

Along a width direction of the secondary battery, the separator width exceeded the negative electrode width by 1.5 mm, 0.5 mm, and 2.8 mm, respectively, as shown in table 3 below.

The electrolytes in Example 3-1 and Example 3-2 were the same as that in Example 1-13, only the width by which the separator exceeded the negative electrode was different.

In other embodiments in tables 1 and 2 of this description, the width by which the separator exceeded the negative electrode was 1.5 mm.

### (4) Preparation of lithium-ion secondary battery

The positive electrode, separator, and negative electrode prepared above were stacked in sequence, so that the separator was located between the positive electrode and the negative electrode for separation. Then, the resulting stack was wound to obtain an electrode assembly. The electrode assembly was placed in an aluminum plastic film packaging bag, dried and injected with the electrolytes obtained in Examples 1-1 to 1-24, 2-1 to 2-17, and Comparative Examples 1-6, respectively, and followed by processes such as vacuum packaging, standing, formation, degassing, and trimming, to obtain a lithium-ion secondary battery.

### Test Example 1: hot box test

### Hot box test at 130°C:

The lithium-ion secondary battery was charged at 25°C to a voltage of 4.52 V with a constant current of 0.5C, and then charged at a constant voltage of 4.52 V to 0.05C and left standing for 60 min. Then the lithium-ion battery was transferred to a high and low temperature box for testing, the high and low temperature box was heated at a rate of 3°C/min, and after heating to a set temperature of 130°C, it was maintained for 60 min. The lithium-ion battery that did not catch fire or explode was recorded as passing the test. Ten lithium-ion batteries were tested for each example or comparative example, and the number of passing the test was recorded.

### Hot box test at 135°C:

Except that the above set temperature was changed to 135°C, the rest was the same as the steps in hot box test at 130°C.

### Test Example 2: test for cycle capacity retention rate

The lithium-ion secondary battery was placed in a 45°C constant temperature box, charged to a voltage of 4.52 V with a constant current of 1.5C, then charged at a constant voltage of 4.52 V to 0.05C, and then discharged to 3.0 V with a constant current of 1.0C. This was one charge and discharge cycle process. The charge and discharge cycle was repeated 500 cycles according to the above manner, and the capacity retention rate of the lithium-ion battery was monitored. Capacity retention rate = 500th discharge capacity / 1st discharge capacity × 100%.

**Table 1 Components and Amounts in Electrolyte in Examples 1-1 to 1-24 and Test Results of Obtained Secondary Batteries**

| Example No. | Fluoroethyl propionate | Content of fluoroethyl propionate (%) | EC + PC (%) | EC:PC ratio | FEC (%) | Fluoroethyl propionate: FEC | Hot box | | Capacity retention rate (%) |
|---|---|---|---|---|---|---|---|---|---|
| | | | | | | | 130°C 1H | 135°C 1H | |
| Example 1-1 | Difluoroethyl propionate | 45 | 5+10 | 0.5 | / | / | 10/10 P | 0/10 P | 72.9 |
| Example 1-2 | Difluoroethyl propionate | 5 | 5+10 | 0.5 | / | / | 2/10 P | 0/10 P | 54.4 |
| Example 1-3 | Difluoroethyl propionate | 12 | 5+10 | 0.5 | / | / | 10/10 P | 0/10 P | 65 |
| Example 1-4 | Difluoroethyl propionate | 31 | 5+10 | 0.5 | / | / | 10/10 P | 0/10 P | 71.9 |
| Example 1-5 | Difluoroethyl propionate | 50 | 5+10 | 0.5 | / | / | *7*/*10* P | 0/10 P | 61.1 |
| Example 1-6 | Difluoroethyl propionate | 65 | 5+10 | 0.5 | / | / | 4/10 P | 0/10 P | 57.8 |
| Example 1-7 | Difluoroethyl propionate | 12 | 10+5 | 2 | / | / | 8/10 P | 0/10 P | 72.6 |
| Example 1-8 | Difluoroethyl propionate | 12 | 12+3 | 4 | / | / | 2/10 P | 0/10 P | 61.3 |
| Example 1-9 | Difluoroethyl propionate | 12 | 3+12 | 0.25 | / | / | 4/10 P | 0/10 P | 62.7 |
| Example 1-10 | Difluoroethyl propionate | 12 | 5+5 | 1 | / | / | 10/10 P | 0/10 P | 68.2 |
| Example 1-11 | Difluoroethyl propionate | 12 | 3+2 | 1.5 | / | / | 10/10 P | 0/10 P | 71.8 |
| Example 1-12 | Difluoroethyl propionate | 12 | 7+7 | 1 | / | / | 10/10 P | 0/10 P | 72.1 |
| Example 1-13 | Difluoroethyl propionate | 12 | 7+7 | 1 | 8 | 1.5 | 10/10 P | *7*/*10* P | 73.3 |
| Example 1-14 | Difluoroethyl propionate | 12 | 7+7 | 1 | 3 | 4 | 10/10 P | 8/10 P | 72.9 |
| Example 1-15 | Difluoroethyl propionate | 12 | 7+7 | 1 | 12 | 1 | 10/10 P | 2/10 P | 72.6 |
| Example 1-16 | Difluoroethyl propionate | 12 | 7+7 | 1 | 15 | 0.8 | 10/10 P | 2/10 P | 72.2 |
| Example 1-17 | Difluoroethyl propionate | 60 | 7+7 | 1 | 5 | 12 | 10/10 P | 3/10 P | 69.8 |
| Example 1-18 | Difluoroethyl propionate | 42 | 7+7 | 1 | 6 | 7.0 | 10/10 P | *7*/*10* P | 72.9 |
| Example 1-19 | Difluoroethyl propionate | 40 | 7+7 | 1 | 4 | 10.0 | 10/10 P | 8/10 P | 71.3 |
| Example 1-20 | Trifluoroethyl propionate | 12 | 7+7 | 1 | / | / | 10/10 P | 0/10 P | 71.9 |
| Example 1-21 | Trifluoroethyl propionate | 35 | 7+7 | 1 | / | / | 10/10 P | 0/10 P | 71.2 |
| Example 1-22 | Difluoroethyl propionate + trifluoroethyl propionate | 16+16 | 5+10 | 0.5 | / | / | 10/10 P | 4/10 P | 72.7 |
| Example 1-23 | Difluoroethyl propionate + trifluoroethyl propionate | 25+7 | 5+10 | 0.5 | / | / | 10/10 P | 1/10 P | 72.1 |
| Example 1-24 | Difluoroethyl propionate + trifluoroethyl propionate | 7+25 | 5+10 | 0.5 | / | / | 10/10 P | 1/10 P | 72.0 |
| Comparative Example 1 | / | / | / | / | / | / | 0/0 P | 0/0 P | 29.2 |
| Comparative Example 2 | Difluoroethyl propionate | 45 | / | / | / | / | 0/0 P | 0/0 P | 33.9 |
| Comparative Example 3 | / | / | 7+7 | 1 | / | / | 0/0 P | 0/0 P | 30.5 |
| Comparative Example 4 | Difluoroethyl propionate | 45 | 10+10 | 1 | / | / | 0/0 P | 0/0 P | 37.8 |
| Comparative Example 5 | Difluoroethyl propionate | 4 | 7+7 | 1 | / | / | 0/0 P | 0/0 P | 38.4 |
| Comparative Example 6 | Difluoroethyl propionate | 70 | 7+7 | 1 | / | / | 0/0 P | 0/0 P | 38.2 |

Where (1) the sum of the contents of each component of the electrolyte is 100%, the content of LiPF₆ is 12.5%, and the remaining components are all DEC (diethyl carbonate); and
(2) "/" in the table indicates that the component is not used, or the content is 0.

**Table 2 Components and Amounts in Electrolyte in Example 1-13 and Examples 2-1 to 2-17 and Test Results of Obtained Secondary Batteries**

| Example No. | Nitrile compound | Content of nitrile compound (%) | FEC (%) | FEC/nitrile compound | Compound represente d by formula II | Content of compound represented by formula II (%) | Hot box | | Capacity retention rate (%) |
|---|---|---|---|---|---|---|---|---|---|
| | | | | | | | 130°C 1H | 135°C 1H | |
| Example 1-13 | / | / | 8 | / | / | / | 10/10 P | 7/10 P | 73.3 |
| Example 2-1 | Succinonitrile | 2 | 8 | 4 | / | / | 10/10 P | 6/10 P | 74.8 |
| Example 2-2 | Adiponitrile | 2 | 8 | 4 | / | / | 10/10 P | 5110 P | 74.3 |
| Example 2-3 | Formula I-5 | 2 | 8 | 4 | / | / | 10/10 P | 4/10 P | 74.5 |
| Example 2-4 | Formula I-11 | 2 | 8 | 4 | / | / | 10/10 P | 5110 P | 73.9 |
| Example 2-5 | Formula I-16 | 2 | 8 | 4 | / | / | 10/10 P | 5110 P | 74.1 |
| Example 2-6 | Formula I-19 | 0.5 | 8 | 16 | / | / | 10/10 P | 1/10 P | 73.1 |
| Example 2-7 | Succinonitrile + adiponitrile | 2+2 | 8 | 2 | / | / | 10/10 P | 6/10 P | 74.3 |
| Example 2-8 | Succinonitrile + adiponitrile + Formula I-5 | 2+1+2 | 8 | 1.6 | / | / | 10/10 P | 6/10 P | 73.2 |
| Example 2-9 | Adiponitrile | 2 | 3 | 0.6 | / | / | 10/10 P | 4/10 P | 73.3 |
| Example 2-10 | Adiponitrile | 0.5 | 4 | 8 | / | / | 10/10 P | 5110 P | 73.9 |
| Example 2-11 | Adiponitrile | 1.25 | 15 | 12 | / | / | 10/10 P | 6/10 P | 74.3 |
| Example 2-12 | / | / | 8 | / | Formula II-1 | 1.5 | 10/10 P | 4/10 P | 73.6 |
| Example 2-13 | / | / | 8 | / | Formula II-1 | 0.2 | 10/10 P | 1/10 P | 73.7 |
| Example 2-14 | / | / | 8 | / | Formula II-1 | 3 | 10/10 P | 4/10 P | 73.9 |
| Example 2-15 | / | / | 8 | / | Formula II-9 | 1.5 | 10/10 P | 3/10 P | 73.7 |
| Example 2-16 | Adiponitrile | 2 | 8 | 4 | Formula II-1 | 1.5 | 10/10 P | 7/10 P | 74.5 |
| Example 2-17 | Succinonitrile + adiponitrile + Formula I-5 | 2+1+2 | 8 | 1.6 | Formula II-1 | 1.5 | 10/10 P | 8/10 P | 74.7 |

Where (1) the sum of the contents of each component of the electrolyte is 100%, the content of LiPF₆ is 12.5%, and the remaining components are all DEC (diethyl carbonate); and
(2) "/" in the table indicates that the component is not used, or the content is 0.

**Table 3 The Width by which The Separator Exceeded The Negative Electrode in Example 1-13, Example 3-1, and Example 3-2 and Test Results of Obtained Secondary Batteries**

| Example No. | The width by which the separator exceeded the negative electrode (mm) | Hot box | |
|---|---|---|---|
| | | 130°C 1H | 135°C 1H |
| Example 1-13 | 1.5 | 10/10 P | 7/10 P |
| Example 3-1 | 0.5 | 8/10 P | 0/10 P |
| Example 3-2 | 2.8 | 10/10 P | 10/10 P |

The foregoing descriptions are merely preferable embodiments of this specification, but are not intended to limit this specification. Any modification, equivalent replacement, or improvement made without departing from the spirit and principle of this specification shall fall within the protection scope of this specification.

## Claims

1. A secondary battery, comprising a non-aqueous electrolyte, **characterized in that**, the non-aqueous electrolyte comprises fluoroethyl propionate, ethylene carbonate (EC), and propylene carbonate (PC);
wherein the fluoroethyl propionate is selected from the group consisting of 2,2-difluoroethyl propanoate, 2,2,2-trifluoroethyl propionate, and a combination thereof;
based on a total mass of the non-aqueous electrolyte, a mass percentage of the fluoroethyl propionate is 5% to 65%; and
based on the total mass of the non-aqueous electrolyte, a sum of the mass percentages of the ethylene carbonate (EC) and the propylene carbonate (PC) is less than or equal to 15%.

2. The secondary battery according to claim 1, **characterized in that**, the non-aqueous electrolyte satisfies at least one of the following conditions:
(1) based on the total mass of the non-aqueous electrolyte, the mass percentage of the fluoroethyl propionate is 10% to 60%;
(2) based on the total mass of the non-aqueous electrolyte, the mass percentage of the ethylene carbonate is less than or equal to 10%; or
(3) based on the total mass of the non-aqueous electrolyte, the mass percentage of the propylene carbonate is less than or equal to 10%.

3. The secondary battery according to claim 1 or 2, **characterized in that**, based on the total mass of the non-aqueous electrolyte, the mass percentage of the fluoroethyl propionate is 12% to 50%.

4. The secondary battery according to any one of claims 1 to 3, **characterized in that**, the non-aqueous electrolyte satisfies at least one of the following conditions:
(1) based on the total mass of the non-aqueous electrolyte, the mass percentage of the fluoroethyl propionate is 12% to 45%; or
(2) based on the total mass of the non-aqueous electrolyte, a ratio of the mass percentage of the ethylene carbonate to the mass percentage of the propylene carbonate is 1:1.

5. The secondary battery according to any one of claims 1 to 4, **characterized in that**, the non-aqueous electrolyte further comprises fluoroethylene carbonate (FEC); and based on the total mass of the non-aqueous electrolyte, a mass percentage of the fluoroethylene carbonate is 3% to 15%.

6. The secondary battery according to claim 5, **characterized in that**, the non-aqueous electrolyte satisfies at least one of the following conditions:
(1) based on the total mass of the non-aqueous electrolyte, the mass percentage of the fluoroethylene carbonate is 3% to 8%; or
(2) based on the total mass of the non-aqueous electrolyte, a ratio of the mass percentage of the fluoroethyl propionate to the mass percentage of the fluoroethylene carbonate is 0.8 to 12.

7. The secondary battery according to any one of claims 1 to 6, **characterized in that**, the non-aqueous electrolyte further comprises a nitrile compound having two or more nitrile groups in a single molecule; and based on the total mass of the non-aqueous electrolyte, a mass percentage of the nitrile compound is 0.5% to 5%; and
the nitrile compound is selected from the group consisting of succinonitrile, glutaronitrile, adiponitrile, pimelonitrile, suberonitrile, 2-methylglutaronitrile, compounds represented by the following formulas I-1 to I-19, and a combination thereof:

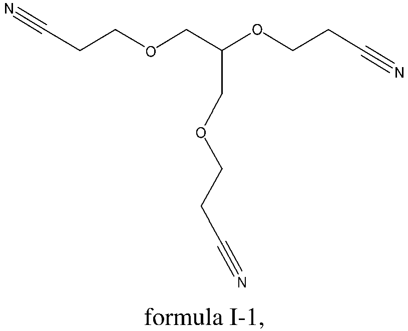

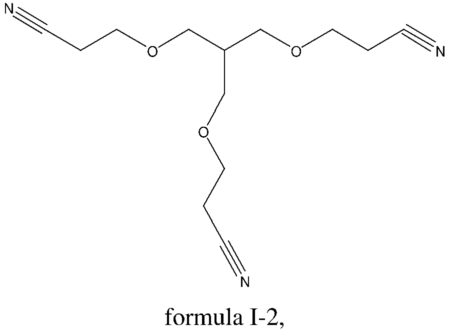

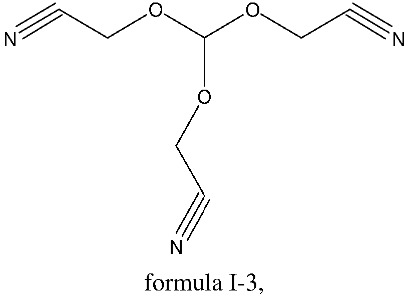

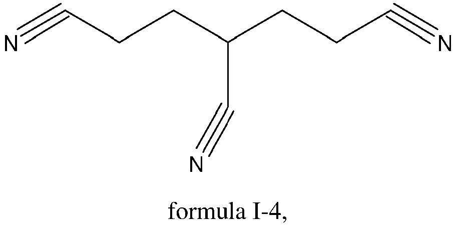

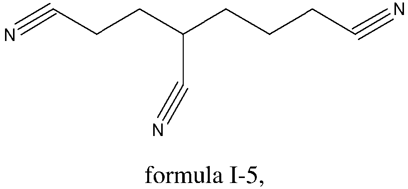

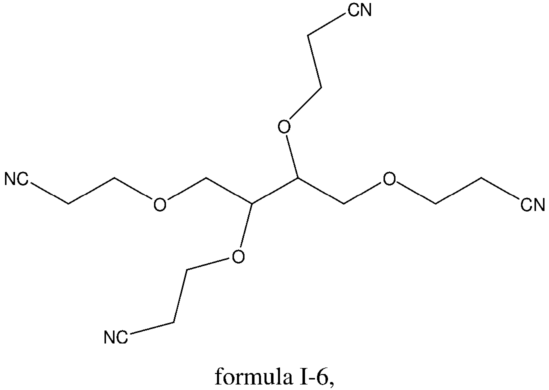

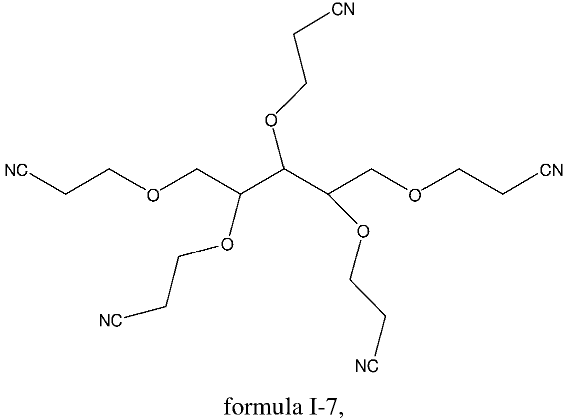

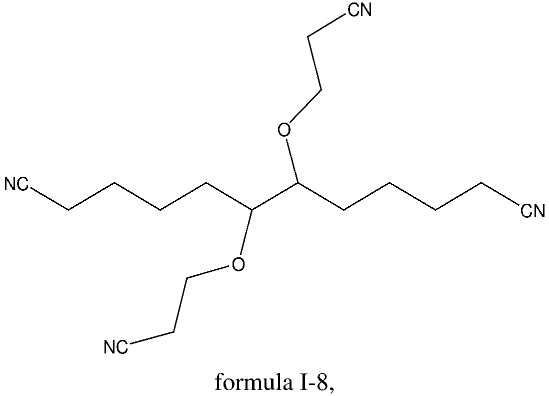

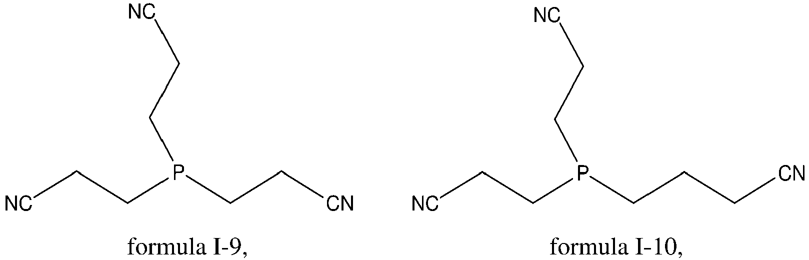

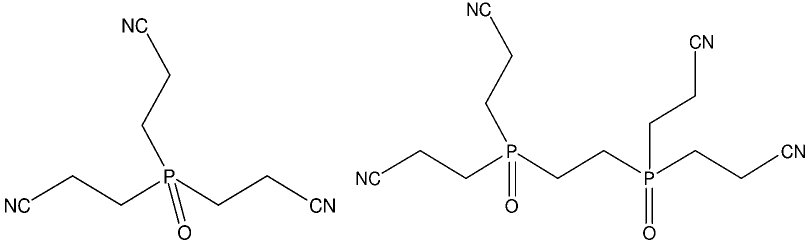

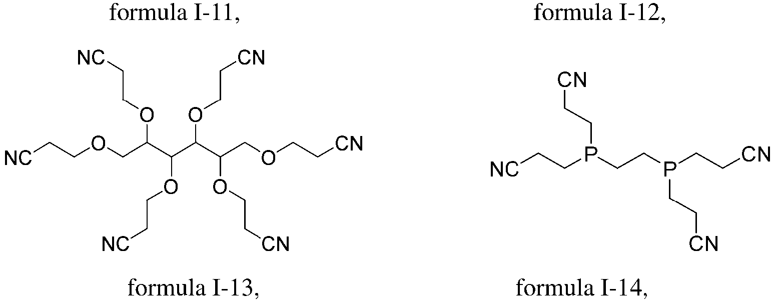

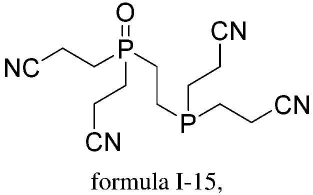

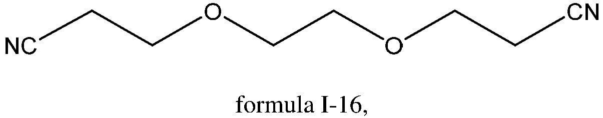

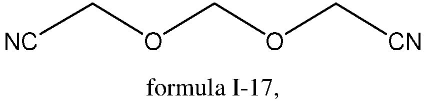

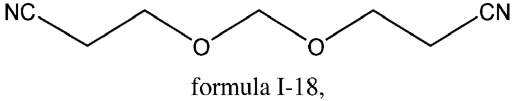

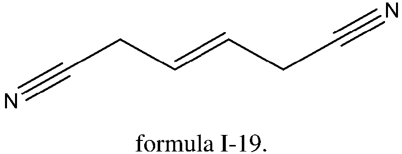

8. The secondary battery according to claim 7, **characterized in that**, based on the total mass of the non-aqueous electrolyte, the mass percentage of the nitrile compound is 1.5% to 4%.

9. The secondary battery according to claim 7, **characterized in that**, the non-aqueous electrolyte further comprises fluoroethylene carbonate (FEC); and based on the total mass of the non-aqueous electrolyte, a mass percentage of the fluoroethylene carbonate is 3% to 15%; and
based on the total mass of the non-aqueous electrolyte, a ratio of the mass percentage of the fluoroethylene carbonate to the mass percentage of the nitrile compound is 0.6 to 16.

10. The secondary battery according to any one of claims 1 to 9, **characterized in that**, the non-aqueous electrolyte further comprises a compound represented by formula II, and the compound represented by formula II is selected from the group consisting of the compounds represented by the following formulas II-1 to II-14, and a combination thereof:

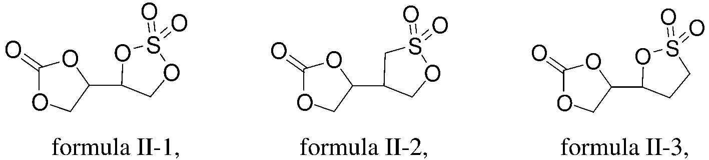

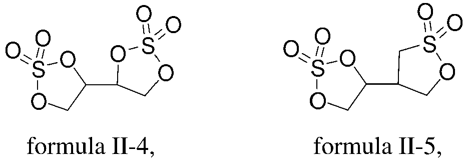

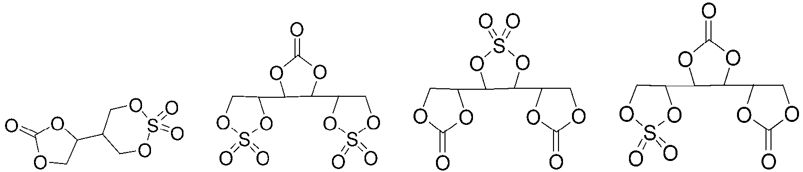

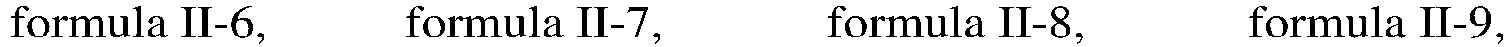

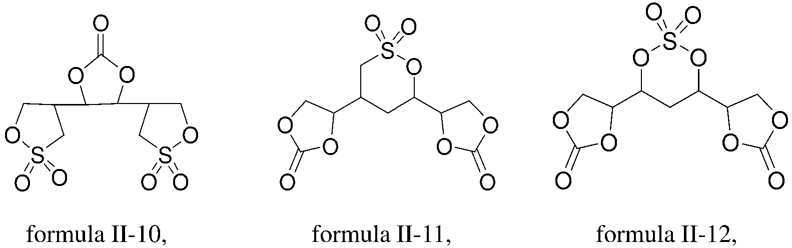

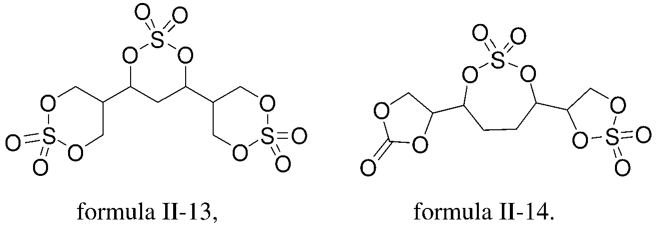

11. The secondary battery according to claim 10, **characterized in that**, based on the total mass of the non-aqueous electrolyte, a mass percentage of the compound represented by formula II is 0.2% to 3%.

12. The secondary battery according to any one of claims 1 to 11, **characterized in that**, the secondary battery further comprises a positive electrode, a negative electrode, a separator, a casing, and a tab; the tab extending from the interior of the casing to the exterior of the casing; and along a direction in which the tab extends, a width of the separator is greater than a width of the negative electrode; and a difference between the width of the separator and the width of the negative electrode is 0.5 mm to 2.8 mm.

13. An electronic apparatus, comprising the secondary battery according to any one of claims 1 to 12.
